(19) Europäisches Patentamt
European Patent Office
Office européen des brevets

(11) **EP 4 447 219 A1**

(12) **EUROPEAN PATENT APPLICATION**
published in accordance with Art. 153(4) EPC

(43) Date of publication:
**16.10.2024 Bulletin 2024/42**

(21) Application number: **22941180.6**

(22) Date of filing: **13.05.2022**

(51) International Patent Classification (IPC):
**H01M 50/559** (2021.01)     **H01M 50/30** (2021.01)
**H01M 50/627** (2021.01)

(52) Cooperative Patent Classification (CPC):
**H01M 50/30; H01M 50/559; H01M 50/627;**
Y02E 60/10

(86) International application number:
**PCT/CN2022/092657**

(87) International publication number:
**WO 2023/216226 (16.11.2023 Gazette 2023/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
(Hong Kong) Limited
Central, Central And Western District (HK)**

(72) Inventors:
• **CHAI, Zhisheng
Ningde, Fujian 352100 (CN)**

• **JIN, Haizu
Ningde, Fujian 352100 (CN)**
• **CHI, Qingkui
Ningde, Fujian 352100 (CN)**
• **YU, Wenjie
Ningde, Fujian 352100 (CN)**

(74) Representative: **Ran, Handong et al
Maucher Jenkins
Seventh Floor Offices
Artillery House
11-19 Artillery Row
London SW1P 1RT (GB)**

(54) **BATTERY END COVER ASSEMBLY, BATTERY CELL, BATTERY AND ELECTRICAL DEVICE**

(57)     A battery end cover assembly, a battery cell, a battery, and an electrical device. A battery end cover assembly (11) comprises: an end cover (2); and a pole (3) disposed on the end cover (2) and having a first through-hole (30); and a sealing nail (4) fixedly connected to the pole (3), and comprising a hollow structure communicated with the first through-hole (30) and an air-permeable film (40) covering the hollow structure.

FIG. 5

## Description

## FIELD

The present disclosure relates to the technical field of batteries, and in particularly, to a battery end cover assembly, a battery cell, a battery, and an electric device.

## BACKGROUND

A rechargeable battery cell, which may be called a secondary battery cell, refers to a battery cell that may activate an active material by charging for continuing to be used after the battery cell is discharged. The rechargeable battery cell is widely used in electronic devices, such as a mobile phone, a laptop computer, an electric scooter, an electric vehicle, an electric airplane, an electric ship, an electric toy car, an electric toy ship, an electric toy airplane, and an electric tool. The battery cell may pose certain safety risks during use of the battery cell.

## SUMMARY

In an aspect of the present disclosure, a battery end cover assembly is provided. The battery end cover assembly includes: an end cover, a pole disposed at the end cover, and a sealing nail fixedly connected to the pole. The pole has a first through hole. The sealing nail includes a hollow structure in communication with the first through hole and an air-permeable film covering the hollow structure.

The first through hole at the pole may be used for injecting an electrolyte into a battery. Moreover, by providing the sealing nail at the pole, an excessive air pressure inside the battery is released through the first through hole of the pole and the air-permeable film in the sealing nail, which may reduce a risk of deformation and liquid leakage of the battery. Moreover, this compact connection structure may balance multi-aspect functions, such as electrical connection of the pole, battery liquid injection, and internal air pressure release of the battery, thereby satisfying space requirements of a limited size at an end portion of the battery.

In some embodiments, the sealing nail includes: a fixing member fixedly connected to the pole, a sealing member disposed in the hollow inner cavity, and the air-permeable film fixedly connected to the second through hole at a periphery of the air-permeable film and closing the second through hole, to enable the hollow structure to be covered with the air-permeable film. The fixing member has a hollow inner cavity. The sealing member has a second through hole. The hollow structure is defined by the second through hole and the hollow inner cavity.

A sealing effect between an inner side and an outer side of the air-permeable film may be realized by the sealing member and the air-permeable film, to reduce a possibility of leakage of the electrolyte in the battery through the sealing nail. Moreover, an excessive air pressure generated during use of the battery is released through the air-permeable film, thereby improving reliability and safety of the battery.

In some embodiments, the sealing member is made of a heat insulation material, the second through hole has a connection slot at a hole wall of the second through hole, and the periphery of the air-permeable film is fixedly inserted into the connection slot.

For an assembly process of welding the fixing member of the sealing nail to the pole, by fixing the air-permeable film in the connection slot of the sealing member, the sealing member may be used to isolate the influence of heat of the fixing member on the air-permeable film, to prevent the air-permeable film from being scalded and failed or destroyed.

In some embodiments, the hollow inner cavity has an annular groove formed at a cavity wall of the hollow inner cavity, and the sealing member includes an elastic sealing ring embedded in the annular groove and in an interference fit with the annular groove.

Through the interference fit between the elastic sealing ring in a closed shape and the annular groove of the cavity wall of the hollow inner cavity, a gap between the elastic sealing ring and the annular groove is eliminated, and the electrolyte is prevented from passing between the sealing member and the fixing member as much as possible, thereby effectively preventing the electrolyte from leaking through the sealing nail. Therefore, the reliability of the battery is further improved.

In some embodiments, the annular groove has an annular protrusion formed at a groove wall of the annular groove on at least one side of the annular groove. The annular protrusion is in close contact with an outer wall of the elastic sealing ring.

The elastic sealing ring is further compressed by the annular protrusion in the annular groove, so that the possibility of the leakage of the electrolyte is reduced, and the elastic sealing ring is caused to be not easily disengaged from the annular groove.

In some embodiments, the first through hole includes a first step hole section and a second step hole section. A cross-sectional area of the first step hole section is smaller than a cross-sectional area of the second step hole section, the sealing nail is supported at a first step end surface where the first step hole section intersects with the second step hole section, and the sealing nail is fixedly connected to the second step hole section.

A step hole at the pole may realize reliable support and a fixed connection of the sealing nail. Moreover, mounting of the sealing nail is facilitated after liquid injection is achieved through the first step hole section at the pole.

In some embodiments, the first through hole includes a first step hole section, a second step hole section, and a third step hole section. The third step hole section is located at a side of the second step hole section away from the first step hole section, and a cross-sectional area of the first step hole section is smaller than a cross-sectional area of the second step hole section, and the cross-sectional area of the second step hole section is smaller than a cross-sectional area of the third step hole section. The sealing nail is supported at least one of a first step end surface where the first step hole section intersects with the second step hole section and a second step end surface where the second step hole section intersects with the third step hole section, and the sealing nail is fixedly connected to the third step hole section.

A multi-step hole at the pole may realize the reliable support and fixed connection of the sealing nail, and also facilitate selection of a weld seam position during welding. In addition, the sealing nail may be conveniently limited when the sealing nail is mounted after the liquid injection is realized through the first step hole section at the pole.

In some embodiments, a circumferential outer contour of the sealing nail is closely attached to an inner contour of the first through hole, and in an axial direction of the first through hole, an end portion of the sealing nail away from the first step hole section is flush with a surface of the pole away from the first step hole section.

The end portion of the sealing nail is flush with the surface of the pole, which is beneficial to a reliable connection with other components connected to the pole. For example, a reliable connection of each of the pole and the sealing nail with the busbar is realized.

In some embodiments, the fixing member includes: a sleeve having an end with a first annular flange extending inwardly relative to an inner wall of the sleeve, and a ring body fixedly connected to an inner wall of the sleeve at a side of the sleeve away from the first annular flange. An extending direction of the first annular flange is perpendicular to a center line of the first through hole. An annular groove accommodating the sealing member is defined by the ring body and the first annular flange.

By disposing the ring body at the inner wall of the sleeve, a positioning function for the ring body may be realized by using the sleeve, and an assembly of the fixing member is facilitated.

In some embodiments, the fixing member includes: a sleeve, a first end the annular groove has a first annular flange extending inwardly relative to a sleeve wall of the sleeve, and a ring body fixedly connected to an end surface of a second end of the sleeve at a side of the sleeve away from the first annular flange. An extending direction of the first annular flange is perpendicular to a center line of the first through hole. The end surface of the second end is perpendicular to the center line of the first through hole. An annular groove accommodating the sealing member is defined by the ring body and the first annular flange.

This structure may be fixedly connected to the end surface of the sleeve with a wider ring body, for example by welding or riveting. When the welding manner is adopted, this structure is conducive to making the weld position far away from the sealing member and the air-permeable film, to avoid damage to the sealing member and the air-permeable film caused by excessive heat during welding.

In some embodiments, the first end of the sleeve further has a second annular flange extending outwardly relative to the sleeve wall of the sleeve. An extending direction of the second annular flange is perpendicular to the center line of the first through hole. The first through hole includes a first step hole section, a second step hole section, and a third step hole section. The third step hole section is located at a side of the second step hole section away from the first step hole section. A cross-sectional area of the first step hole section is smaller than a cross-sectional area of the second step hole section, and the cross-sectional area of the second step hole section is smaller than a cross-sectional area of the third step hole section, and at least one of the second end of the sleeve and the ring body is supported at a first step end surface where the first step hole section intersects with the second step hole section. The second annular flange is supported at a second step end surface where the second step hole section intersects with the third step hole section, and the second annular flange is fixedly connected to the third step hole section.

For a three-stage step hole, a stable support function to the end surface of the second end and the second annular flange of the sleeve may be realized by the first through hole through the first step end surface and the second step end surface, and a part of the third step hole section fixedly connected to the second annular flange is farther away from the second step hole section. In this way, when a fixed connection manner such as welding is adopted, the influence of weld heat on the sealing member and the air-permeable film that are located in the second step hole section is reduced.

In some embodiments, a thickness of the second annular flange is d1, a thickness of the ring body is d2, a radial distance from an outer edge of the second annular flange to an outer edge of the sealing member is d3, a capacity of a battery cell using the battery end cover assembly is C, a diameter of a through hole defined by the first annular flange is $\Phi 1$, a diameter of a through hole defined by the ring body is $\Phi 2$, and a diameter of the second through hole is $\Phi 3$. A diameter of the first step hole section (31) is $\Phi 4$. d1, d2, d3, C, $\Phi 1$, $\Phi 2$, $\Phi 3$, and $\Phi 4$ satisfy at least one of:

(a)

$$d1/C \geq 0.022 mm/Ah;$$

(b)

$$(d1+d2)/C \geq 0.06 mm/Ah;$$

(c)

$$d3/C \geq 0.09mm/Ah;$$

(d) $\Phi4 \geq \Phi1$, $\Phi4 \geq \Phi2$, $\Phi4 \geq \Phi3$;
(e) $\Phi1 = 1{\sim}5mm$, optionally, $\Phi1 = 1{\sim}3mm$;
(f) $\Phi2 = 1{\sim}5mm$, optionally, $\Phi1 = 1{\sim}3mm$;
(g) $\Phi3 = 1{\sim}5mm$, optionally, $\Phi1 = 1{\sim}3mm$; and
(h) $\Phi4 = 2{\sim}5mm$.

By making d1 and C satisfy $d1/C \geq 0.022mm/Ah$, a risk of deformation or melting of the sealing member and the air-permeable film caused by the heat during welding may be lowered. By making d1, d2, and C satisfy $(d1+d2)/C \geq 0.06mm/Ah$, a possibility of disengagement of the sealing nail from the pole during thermal runaway of the battery cell may be lowered, and safety performance of the battery cell may be improved. By making d3 and C satisfy $d3/C \geq 0.09mm/Ah$, a weld position between the sealing nail and the pole may be made far away from the sealing member, and welding of the sealing nail and the busbar at a position farther away from the sealing member is allowable, thereby lowering the risk of the deformation or melting of the sealing member and the air-permeable film due to the influence of weld heat.

Injection efficiency of the electrolyte may be improved by providing a larger diameter $\Phi4$ of the first step hole section. Slow leakage of a gas in the battery cell may be realized by using smaller diameters $\Phi1$, $\Phi2$, and $\Phi3$ of the through hole accordingly. In this way, under extreme conditions such as excessive internal pressure or thermal runaway of the battery cell, the sealing nail will not be opened or melted first than an explosion-proof valve of the battery cell.

By setting appropriate diameters $\Phi1$, $\Phi2$, and $\Phi3$ of the through hole, the excessive air pressure inside the battery cell may be effectively released, and safety of the battery cell in extreme cases such as thermal runaway may be improved.

In some embodiments, the second annular flange is welded to the third step hole section. A fusion depth of a weld seam obtained by welding is d4, where $d4 \geq 0.3mm$, optionally, $d4 \geq 0.5mm$. A fusion width of the weld seam obtained by welding is W, where $W \geq 0.5mm$, optionally, $W \geq 1mm$.

When the second annular flange and the third step hole section of the sleeve are connected to each other by welding, an appropriate fusion depth and fusion width may improve a connection strength between the sealing nail and the pole, causing the weld seam to be less likely to fail during the thermal runaway of the battery cell.

In some embodiments, the hollow inner cavity has an annular groove formed at a cavity wall of the hollow inner cavity. The sealing member includes an elastic sealing ring embedded in the annular groove. The annular groove has an annular protrusion formed at a groove wall of the annular groove on at least one side of the annular groove. The annular protrusion is in close contact with an outer wall of the elastic sealing ring. An inner ring diameter of the annular protrusion is $\Phi6$, where $\Phi6 \geq \Phi1$, $\Phi6 \geq \Phi2$, $\Phi6 \geq \Phi3$.

By making the inner ring diameter $\Phi6$ of the annular protrusion greater than or equal to the diameters $\Phi1$, $\Phi2$ and $\Phi3$ of the through hole, a larger close contact area may be allowed to be obtained between the elastic sealing ring and the annular protrusion, thereby forming a more reliable sealing effect.

In some embodiments, the air-permeable film has an air permeability ranging from 5 mm/s to 50 mm/s and a melting point greater than or equal to 150°C.

The air-permeable film with the air permeability ranging from 5 mm/s to 50 mm/s and the melting point greater than or equal to 150°C may satisfy requirements for pressure relief inside the battery cell, and is not easy to be melted during welding of the sealing nail, welding of the busbar, and the thermal runaway of the battery cell.

In some embodiments, the air-permeable film includes a nanofiber membrane having a thickness T1 ranging from 0.01 mm to 1 mm and micropores, and the micropores each has a pore diameter ranging from 0.5 $\mu$m to 10 $\mu$m.

The nanofiber membrane may include polyvinylidene fluoride, perfluoroethylene propylene copolymer, polyolefin, vinylidene fluoride-hexafluoropropylene copolymer, and the like. An air permeability requirement may be satisfied by setting a suitable thickness T1 and micropore aperture.

In some embodiments, a thickness T2 of the sealing member ranges from 0.1 mm to 1 mm.

By setting the appropriate thickness T2 of the sealing member, it is possible to prevent sealing performance from being affected by too small thickness T2, and to prevent a battery capacity from being affected because a large space of the battery cell is occupied by an overlarge thickness.

In an aspect of the present disclosure, a battery cell is provided. The battery cell includes: a housing having a chamber; an electrode assembly located in the chamber; and the aforementioned battery end cover assembly. The battery end cover assembly is disposed at an end of the housing, and a pole in the battery end cover assembly is electrically connected to the electrode assembly.

The battery end cover assembly may be fixedly connected to an opening at one end of the housing through assembly, such as by welding and the like. A part of the battery end cover assembly may also be integrally formed with the housing, for example, such that the end cover is integrally formed with the housing. The battery cell using the embodiments of the foregoing battery end cover assembly may obtain better safety performance.

In some embodiments, the electrode assembly is a cylindrical electrode assembly. A cross-sectional diameter D of the electrode cylindrical assembly ranges from 20 mm to 60 mm, and an axial length H of the electrode cylindrical assembly ranges from 60 mm to 150 mm.

For the cylindrical battery cell, by using a suitable cross-sectional area D and axial length H, not only can capacity requirements of the electrode assembly be satisfied as much as possible, but an overcurrent of the housing is also avoided as much as possible.

In some embodiments, the cylindrical electrode assembly has a cross-sectional diameter D ranging from 36 mm to 56 mm and an axial length H ranging from 80 mm to 130 mm.

The cross-sectional area D ranging from 36 mm to 56 mm and the axial length H ranging from 80 mm to 130 mm are adopted, which may further satisfy a capacity requirement of a motor assembly and effectively avoid the overcurrent of the housing.

In an aspect of the present disclosure, a battery is provided. The battery includes: a plurality of battery cells, and a busbar. At least one of the plurality of battery cells is the aforementioned battery cell. The plurality of battery cells are electrically connected to each other through the busbar. The electrical connection between the plurality of battery cells may be realized through the busbar.

The battery using the embodiments of the foregoing battery cell may obtain better safety performance.

In some embodiments, the busbar is located at a side of an end cover adjacent to a sealing nail and has an end portion fixedly connected to at least one of the sealing nail and the pole. The end portion has a third through hole in communication with a hollow structure.

The third through hole is disposed at the busbar and is in communication with the hollow structure of the sealing nail, so that the excessive air pressure inside the battery cell may be discharged outwards through the air-permeable film located in the hollow structure and the third through hole, thereby lowering a risk of excessive deformation or liquid leakage of the battery cell caused by the excessive pressure inside the battery cell.

In some embodiments, a diameter of the third through hole is $\Phi 5$, where $\Phi 5 = 0.5 \sim 5$mm, optionally, $\Phi 5 = 0.5 \sim 2.5$mm.

By adopting a suitable diameter $\Phi 5$ of the third through hole, while an effect of releasing the internal air pressure of the battery cell is satisfied, slow leakage of the gas in the battery cell is realized. In this way, under extreme conditions such as the excessive internal pressure or thermal runaway of the battery cell, the sealing nail is caused not to be opened or melted first than the explosion-proof valve of the battery cell.

In some embodiments, a diameter of an annular weld seam formed by welding the busbar and the fixing member is $\Phi 7$, and a diameter of a circumferential outer edge of the sealing member is $\Phi 8$, where $\Phi 7 \geq 1.1 * \Phi 8$, optionally, $\Phi 7 \geq 1.5 * \Phi 8$.

When the diameter of the annular weld seam is large, a welding part may be made farther away from the sealing member, thereby reducing the influence of the weld heat on the sealing member and the air-permeable film.

In an aspect of the present disclosure, an electric device is provided, including the foregoing battery. The electric device using the embodiments of the foregoing battery may obtain better safety performance.

## BRIEF DESCRIPTION OF THE DRAWINGS

In order to clearly explain technical solutions of embodiments of the present disclosure, drawings needing to be used in the embodiments of the present disclosure are briefly described below. Obviously, the drawings as described below are merely some embodiments of the present disclosure. Based on these drawings, other drawings can be obtained by those skilled in the art without creative effort.

The present disclosure can be more clearly understood from the following detailed description with reference to the accompanying drawings, in which:

FIG. 1 is a schematic structural view according to some embodiments of an electric device of the present disclosure.
FIG. 2 is a schematic structural view according to some embodiments of a battery of the present disclosure.
FIG. 3 is a schematic structural view of an electrical connection between a plurality of battery cells according to some embodiments of a battery of the present disclosure.
FIG. 4 is a schematic structural view of a longitudinal cross-section according to some embodiments of a battery cell of the present disclosure.
FIG. 5 is a partially schematic enlarged view of a battery end cover assembly enclosed by an ellipse in FIG. 4.
FIG. 6 is an exploded schematic view of an assembled structure of the pole and the sealing nail in FIG. 5.
FIG. 7 (a), FIG. 7 (b), and FIG. 7 (c) are schematic structural views of a sealing nail according to some embodiments of a battery end cover assembly of the present disclosure, respectively.
FIG. 8 is a schematic cross-sectional view of a battery cell and a busbar according to some embodiments of a battery of the present disclosure.
FIG. 9 is a schematic structural view where a busbar is welded onto a sealing nail according to some embodiments of a battery of the present disclosure.

It should be understood that dimensions of various parts shown in the drawings are not drawn to scale as an actual proportional relationship. In addition, the same or similar reference numerals denote the same or similar components.

The reference signs are explained as follows:

10: battery cell; 11: battery end cover assembly, 12: housing; 13: electrode assembly; 131: tab; 132: current collection tray;

2: end cover;

3: pole; 31: first step hole section; 32: second step hole section; 33: third step hole section; 34: first step end surface; 35: second step end surface;

4: sealing nail; 40: air-permeable film; 41: fixing member; 42: sealing member; 411: annular groove; 412: sleeve; 413: ring body; 421: second through hole; 411a: annular protrusion; 412a: first annular flange; 412b: second annular flange;

50: battery; 51: case body; 52: seal-capping; 53: busbar; 531: third through hole;

60: vehicle.

## DETAILED DESCRIPTION

Implementations of the present disclosure are described in further detail below in combination with the accompanying drawings and embodiments. The following detailed description of the embodiments and the accompanying drawings are provided to illustrate the principles of the present disclosure and are not intended to limit the scope of the present disclosure, i.e., the present disclosure is not limited to the embodiments described.

In the description of the present disclosure, it should be noted that, unless otherwise clearly described, the term "plurality" refers to more than two. The orientation or the position indicated by technical terms such as "over", "below", "left", "right", "inner", and "outer" is only for the convenience of describing the present disclosure and simplifying the description, rather than indicating or implying that the pointed apparatus or element must have a specific orientation, or be constructed and operated in a specific orientation, and therefore cannot be understood as a limitation of the present disclosure. In addition, the terms "first", "second", "third", and the like are used for descriptive purposes only and are not to be understood as indicating or implying relative importance. "Vertical" is not vertical in the strict sense, but within permeable error limits. "Parallel" is not parallel in the strict sense, but within the permeable error limits.

The orientation words appearing in the following description are directions shown in the drawings and do not limit the specific structure of the present disclosure. In the present disclosure, it should be noted that, unless otherwise clearly specified and limited, terms such as "install", "connect", "couple", and the like should be understood in a broad sense. For example, it may be a fixed connection or a detachable connection or connection as one piece; or a direct connection or an indirect connection through an intermediate. For those of ordinary skill in the art, the specific meaning of the above terms in the present disclosure should be understood according to specific circumstances.

Some implementations of the present disclosure will be described in detail below with reference to the accompanying drawings. Features disclosed in the embodiments described below can be combined with each other without conflicting.

In some related technologies, a cylindrical battery has less internal free space. During use of the battery, a gas will be produced inside the battery. Since the gas cannot be effectively discharged from the battery, an air pressure inside the battery is caused to continue to increase, which may lead to the occurrence of large deformation of the battery due to an excessive internal air pressure of the battery, and even the occurrence of a risk of leakage of an internal electrolyte.

In view of this, the embodiments of the present disclosure provide a battery end cover assembly, a battery cell, a battery, and an electric device, which can improve safety performance of the battery.

The battery end cover assembly according to the embodiments of the present disclosure may be applied to various types of battery cells. The battery cell may include a lithium-ion secondary battery, a lithium-ion primary battery, a lithium-sulfur battery, a sodium-lithium-ion battery, a sodium-ion battery, or a magnesium-ion battery, etc., and the embodiments of the present disclosure are not limited thereto. The battery cell may have cylindrical, flat, rectangular, or other shapes, and is especially suitable for the cylindrical battery cell.

The battery cell according to the embodiments of the present disclosure may be applied to various types of batteries. The battery may be used for supplying power to an electric device such as a vehicle, for example, providing the vehicle with a power supply for operating and controlling or a power supply for driving and steering. The battery may include a housing and a battery module. The housing is configured to provide the battery module with an accommodation space, and the battery module is mounted in the housing. The housing may be made of a metal material. The battery module may include a plurality of battery cells connected in series or in parallel or in series and parallel. The battery cell is the smallest unit that makes up the battery. The battery cell includes an electrode assembly capable of generating an electrochemical reaction.

The battery in the embodiments of the present disclosure may be applied to various types of electric devices using batteries. The electric device may be a mobile phone, a portable device, a laptop computer, an electric scooter, an electric vehicle, a ship, a spacecraft, an electric toy, an electric tool, and the like. The spacecraft includes an airplane, a rocket, a space shuttle, a spaceship, or the like. The electric toy includes a fixed electric toy or a mobile electric toy, e.g., a game console, an electric car toy, an electric ship toy, and an electric airplane toy. The electric tool includes a metal cutting electric tool, a grinding electric tool, an assembling electric tool, and a railway power tool, e.g., an electric drill, an electric grinding machine, an electric wrench, an electric screwdriver, an electric hammer, an impact electric drill, a concrete vibrator, and an electric planer. In the embodiments of the present disclosure, the above-mentioned electric devices are not particularly limited.

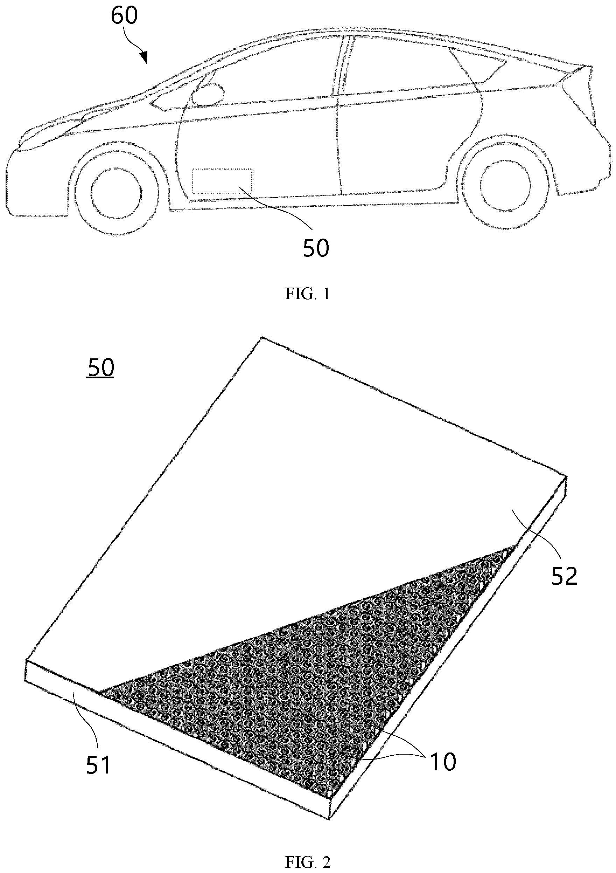

FIG. 1 is a schematic structural view according to some embodiments of an electric device of the present disclosure. For convenience, as an example, an electric device is used as a vehicle for description. Referring to FIG. 1, a battery 50 is provided inside a vehicle 60, and is disposed at a bottom, a head, or a tail of the vehicle 60. The battery 50 supplies power to the vehicle 60. For example, the battery 50 serves as an operational power source for the vehicle 60. The battery 50 may be used as a power supply for apparatuses such as new energy vehicles, ships, and intelligent electrical cabinets. The battery 50 may also serve as a power supply component to provide various types of electronic elements of the apparatus with a required electrical energy.

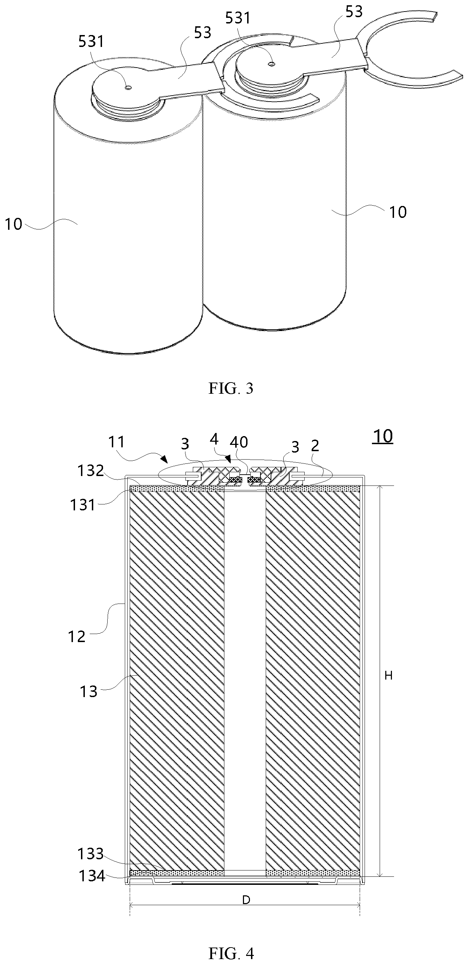

FIG. 2 is a schematic structural view according to some embodiments of a battery of the present disclosure. FIG. 3 is a schematic structural view of an electrical connection between a plurality of battery cells according to some embodiments of a battery of the present disclosure. Referring to FIG. 2, in some embodiments, the battery 50 includes a case body 51, a seal-capping 52, and one or more battery cells 10 disposed in the case body 51. In order to facilitate viewing of a plurality of battery cells 10 within the case body 51, FIG. 2 shows only a part of the seal-capping 52. Referring to FIG. 2 and FIG. 3, the plurality of battery cells 10 are electrically connected to each other, such as connected to each other in series or in parallel or in series and parallel, to achieve required electrical performance parameters of the battery 50. The plurality of battery cells 10 are arranged in rows. One or more rows of battery cells 10 may be provided in the case body as required.

In some embodiments, each battery cell 10 of the battery 50 may be arranged in at least one of a length direction and a width direction of the case body. At least one row or one column of battery cells 10 may be provided as actual needs. One or more layers of battery cells 10 may also be provided in a height direction of the battery 50 as needed.

In some embodiments, the plurality of battery cells 10 may be connected in series or in parallel or in series and parallel to form a battery module. Then, a plurality of battery modules is connected in series or in parallel or in series and parallel again to form a whole, and is accommodated in the case body 51. In some other embodiments, all the battery cells 10 are directly connected in series or in parallel or in series and parallel, and then are integrally accommodated in the case body. In FIG. 3, an electrode terminal of the battery cell 10 may be electrically connected to an adjacent battery cell 10 through a busbar 53.

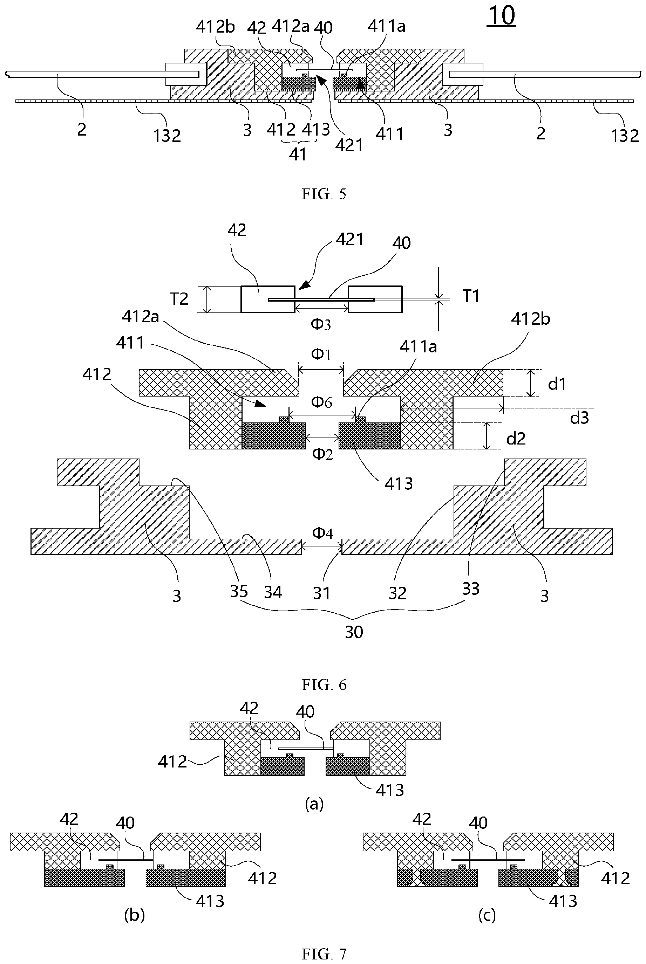

FIG. 4 is a schematic structural view of a longitudinal cross-section according to some embodiments of a battery cell of the present disclosure. FIG. 5 is a partially schematic enlarged view of a battery end cover assembly enclosed by an ellipse in FIG. 4. FIG. 6 is an exploded schematic view of an assembled structure of the pole and the sealing nail in FIG. 5. Referring to FIG. 4, the battery cell 10 provided by the embodiments of the present disclosure includes a housing 12, an electrode assembly 13, and a battery end cover assembly 11. The housing 12 has a chamber where the electrode assembly 13 is located. The battery end cover assembly 11 is disposed at one end of the housing 12, and a pole 3 in the battery end cover assembly 11 is electrically connected to the electrode assembly 13. Other than the electrode assembly 13, the battery end cover assembly 11, and the housing 12, the battery cell 10 further includes an electrolyte.

The battery end cover assembly 11 may be fixedly connected to an opening at one end of the housing 12 by assembling, for example, by welding or the like. A part of the battery end cover assembly 11 may also be integrally formed with the housing 12. For example, in FIG. 4, an end cover 2 in the battery end cover assembly 11 is formed integrally with the housing 12.

For a cylindrical battery cell, when a structure (such as a structure shown in FIG. 4), in which two electrodes with opposite polarities are located at a same side of the battery cell, is adopted. The pole 3, as a first electrode of the battery cell 10, is located at a central position of the battery end cover assembly 11, and is electrically connected to a first electrode tab 131 of the electrode assembly 13 through a first current collection tray 132. At the same time, a second electrode tab 133 of the electrode assembly 13 is electrically connected to the housing 12 through a second current collection tray 134, and transfers electric charge to a second electrode of the battery cell 10 located at an outer ring of the pole 3 through the housing 12.

Generally, a cross-sectional area D or an axial length H of the cylindrical electrode assembly 13 is positively correlated with a capacity of the electrode assembly 13. When the cross-sectional area D or the axial length H is too large, the capacity of the electrode assembly is also large. At this time, it is possible to cause that the housing may not be able to satisfy overcurrent requirements. However, when the cross-section area D is too large or the axial length H is too small, it is possible to cause that the capacity of the electrode assembly is small. In some embodiments, the electrode assembly 13 is a cylindrical electrode assembly having a cross-sectional diameter D ranging from 20 mm to 60 mm and an axial length H ranging from 60 mm to 150 mm. By using a suitable cross-sectional area D and axial length H, not only can capacity requirements of the electrode assembly be satisfied as much as possible, but an overcurrent of the housing is also avoided as much as possible.

Optionally, the cylindrical electrode assembly has a cross-sectional diameter D ranging from 36 mm to 56 mm and an axial length H ranging from 80 mm to 130 mm. The cross-sectional area D ranging from 36 mm to 56 mm and the axial length H ranging from 80 mm to 130 mm are adopted, which may further satisfy a capacity requirement of a motor assembly and effectively avoid the overcurrent of the housing.

In some other embodiments, the embodiments of the battery cell of the present disclosure may also employ a bipolar design, or a structure where the first and second electrodes of the battery cell are located at different sides.

Referring to FIG. 4 to FIG. 6, the embodiments of the present disclosure provide a battery end cover assembly usable for the aforementioned battery cell. The battery end cover assembly 11 includes an end cover 2, a pole 3, and a sealing nail 4. The pole 3 is disposed at the end cover 2 and has a first through hole 30. The sealing nail 4 is fixedly connected to the pole 3 and includes a hollow structure in communication with the first through hole 30 and an air-permeable film 40 covering the hollow structure.

In this embodiment, the first through hole 30 at the pole 3 may be used for injection of an electrolyte into the battery. Moreover, by providing the sealing nail 4 at the pole 3, effective sealing of the electrolyte inside the battery may be realized through the sealing nail 4 and the air-permeable film 40. When the air pressure inside the battery is significantly higher than an air pressure outside the battery, for example, when the gas is generated inside the battery during the use of the battery, the gas inside the battery may be slowly released outwards by passing through the first through hole 30 of the pole 3 and the air-permeable film 40 in the sealing nail 4, thereby lowering the air pressure inside the battery, further reducing a risk of deformation and leakage of the battery. Moreover, this compact connection structure may balance multi-aspect functions, such as electrical connection of the pole 3, battery liquid injection, and internal air pressure release of the battery, thereby satisfying space requirements of a limited size at an end portion of the battery.

An air permeability of the air-permeable film may refer to GB/T 5453-1997 *Determination Standards for Air Permeability of Textiles and Fabrics.* An air permeability of a sample is tested by a digital fabric air-permeability meter, with test conditions: Nozzle No. 05, an experimental area of 20cm2, and a pressure difference of 100Pa. In some embodiments, the air-permeable film 40 has an air permeability ranging from 5 mm/s to 50 mm/s and a melting point greater than or equal to 150°C. The air-permeable film may satisfy requirements for pressure relief inside the battery cell, and is not easy to be melted during welding of the sealing nail, welding of the busbar, and thermal runaway of the battery cell.

In some embodiments, the air-permeable film 40 includes a nanofiber membrane, which may include polyvinylidene fluoride, perfluoroethylene propylene copolymer, polyolefin, vinylidene fluoride-hexafluoropropylene copolymer, and the like. The nanofiber membrane has a thickness $T_1$ ranging from 0.01 mm to 1 mm and micropores, and the micropores each has a pore diameter ranging from 0.5 $\mu$m to 10 $\mu$m, to satisfy require-

ments of the aforementioned air permeability.

Referring to FIG. 5 and FIG. 6, in some embodiments, the sealing nail 4 includes a fixing member 41 and a sealing member 42. The fixing member 41 is fixedly connected to the pole 3 and has a hollow inner cavity. In FIG. 6, a middle space of the fixing member 41 is the hollow inner cavity. The sealing member 42 is disposed in the hollow inner cavity and has a second through hole 421. The hollow structure is defined by the second through hole 421 and the hollow inner cavity. For example, the hollow structure in FIG. 5 is defined by the second through hole 421 of the sealing member 42 and a hollow inner cavity enclosed by fixing members 41 located at both upper and lower sides of the second through hole.

The air-permeable film 40 is fixedly connected to the second through hole 421 at a periphery of the air-permeable film 40 and closes the second through hole 421, to enable the hollow structure to be covered with the air-permeable film 40. A sealing effect between an inner side and an outer side of the air-permeable film 40 may be realized by the sealing member 42 and the air-permeable film 40, to reduce a possibility of leakage of the electrolyte in the battery through the sealing nail 4. Moreover, an excessive air pressure generated during the use of the battery is released through the air-permeable film 40, thereby improving reliability and safety of the battery.

The sealing member 42 may be made of a heat insulation material. The second through hole 421 has a connection slot at a hole wall of the second through hole 421. The periphery of the air-permeable film 40 may be fixedly inserted into the connection slot. For an assembly process of welding the fixing member 41 of the sealing nail 4 to the pole 3, by fixing the air-permeable film 40 in the connection slot of the sealing member 42, the sealing member 42 may be used to isolate the influence of heat of the fixing member 41 on the air-permeable film 40, to prevent the air-permeable film 40 from being scalded and failed or destroyed. By inserting the periphery of the air-permeable film 40 into the connection slot, it is possible to increase a contact area between the air-permeable film 40 and the sealing member 42, improve a bonding strength between the air-permeable film 40 and the sealing member 42, and lower a possibility that the air-permeable film 40 is disengaged from the sealing member 42 under the action of the air pressure inside the battery.

In FIG. 5 and FIG. 6, the hollow inner cavity has an annular groove 411 formed at a cavity wall of the hollow inner cavity. The sealing member 42 includes an elastic sealing ring embedded in the annular groove 411 and in an interference fit with the annular groove 411. Through the interference fit between the elastic sealing ring in a closed shape and the annular groove 411 of the cavity wall of the hollow inner cavity, a gap between the elastic sealing ring and the annular groove 411 is eliminated, and the electrolyte is prevented from passing between the sealing member 42 and the fixing member 41 as much as possible, thereby effectively preventing the electrolyte from leaking through the sealing nail 4. Therefore, the reliability of the battery is further improved.

For the elastic sealing ring, the elastic sealing ring may be made of materials including tetrafluoroethylene-perfluoroalkoxy vinyl ether copolymer Polyfluoroalkoxy (PFA), fluorine rubber, or the like, with a melting point greater than 250 °C or long-term normal use below 250 °C. Referring to FIG. 6, in some embodiments, a thickness T2 of the sealing member 42 ranges from 0.1 mm to 1 mm. By setting an appropriate thickness T2 of the sealing member, it is possible to prevent sealing performance from being affected by too small thickness T2, and to prevent a battery capacity from being affected because a large space of the battery cell is occupied by an overlarge thickness.

In order to further improve the sealing effect, referring to FIG. 5 and FIG. 6, in some embodiments, the annular groove 411 has an annular protrusion 411a formed at a groove wall of the annular groove 411 on at least one side (e.g., a groove wall of a single side or groove walls of two sides) of the annular groove 411. The annular protrusion 411a is in close contact with an outer wall of the elastic sealing ring. In this way, the elastic sealing ring is further compressed by the annular protrusion 411a in the annular groove 411, so that the sealing performance is improved, the possibility of the leakage of the electrolyte is reduced, and the elastic sealing ring is also caused not to be easily disengaged from the annular groove 411.

Referring to FIG. 6, in some embodiments, the first through hole 30 includes a first step hole section 31, a second step hole section 32, and a third step hole section 33. The third step hole section 33 is located at a side of the second step hole section 32 away from the first step hole section 31. A cross-sectional area of the first step hole section 31 is smaller than a cross-sectional area of the second step hole section 32, and the cross-sectional area of the second step hole section 32 is smaller than a cross-sectional area of the third step hole section 33.

The sealing nail 4 is supported at least one of a first step end surface 34 where the first step hole section 31 intersects with the second step hole section 32 and a second step end surface 35 where the second step hole section 32 intersects with the third step hole section 33, and is fixedly connected to the third step hole section 33.

A multi-step hole at the pole 3 may realize reliable support and a fixed connection of the sealing nail 4, and also facilitate selection of a weld seam position during welding. In addition, the sealing nail 4 may be conveniently limited when the sealing nail 4 is mounted after liquid injection is realized through the first step hole section 31 at the pole 3.

In some other embodiments, the first through hole 30 includes a first step hole section 31 and a second step hole section 32. The cross-sectional area of the first step hole section 31 is smaller than the cross-sectional area of the second step hole section 32. The sealing nail 4 is supported at the first step end surface 34 where the first step hole section 31 intersects with the second step hole section 32, and is fixedly connected to the second step hole section 32. A step hole at the pole 3 may realize the reliable support and fixed connection of the sealing nail 4. Moreover, the mounting of the sealing nail 4 is facilitated after the liquid injection is achieved through the first step hole section 31 at the pole 3.

In the above-described embodiment, a circumferential outer contour of the sealing nail 4 is closely attached to an inner contour of the first through hole 30, to ensure a reliable connection and sealing performance between the sealing nail 4 and the pole 3. In an axial direction of the first through hole 30, an end portion of the sealing nail 4 away from the first step hole section 31 is flush with a surface of the pole 3 away from the first step hole section 31. The end portion of the sealing nail 4 is flush with the surface of the pole 3, which is beneficial to a reliable connection with other components connected to the pole 3. For example, a reliable connection of each of the pole 3 and the sealing nail 4 with the busbar is realized.

FIG. 7 (a), FIG. 7 (b), and FIG. 7 (c) are schematic structural views of a sealing nail according to some embodiments of a battery end cover assembly of the present disclosure, respectively. The fixing member 41 may be of an integrally formed structure, or may be formed by assembling a plurality of components. For an assembly manner, the sealing member 42 may be made more conveniently disposed in the annular groove 411 formed by the fixing member 41.

Referring to FIG. 5 to FIG. 7 (a), in some embodiments, the fixing member 41 includes a sleeve 412 and a ring body 413. The sleeve 412 has an end with a first annular flange 412a extending inwardly relative to an inner wall of the sleeve 412. An extending direction of the first annular flange 412a is perpendicular to a center line of the first through hole 30 (for the first through hole having a circular cross-section, the center line is a central axis).

The ring body 413 is fixedly connected to an inner wall of the sleeve 412 at a side of the sleeve 412 away from the first annular flange 412a. An annular groove 411 accommodating the sealing member 42 is defined by the ring body 413 and the first annular flange 412a. By disposing the ring body 413 at the inner wall of the sleeve 412, a positioning function for the ring body 413 may be realized by using the sleeve 412, and an assembly of the fixing member 41 is facilitated.

Referring to FIG. 7 (b) and FIG. 7 (c), in some embodiments, the fixing member 41 includes a sleeve 412 and a ring body 413. A first end of the sleeve 412 has a first annular flange 412a extending inwardly relative to a sleeve wall of the sleeve 412. An extending direction of the first annular flange 412a is perpendicular to a center line of the first through hole 30. The extending direction of the first annular flange 412a is perpendicular to the center line of the first through hole 30 (for the first through hole having the circular cross-section, the center line is the central axis).

The ring body 413 is fixedly connected to an end surface of a second end of the sleeve 412 at a side of the sleeve 412 away from the first annular flange 412a. The end surface of the second end is perpendicular to the center line of the first through hole 30. The annular groove 411 accommodating the sealing member 42 is defined by the ring body 413 and the first annular flange 412a.

Such a structure may employ a wider ring body 413 to be fixedly connected to the end surface of the sleeve 412, for example, by welding in FIG. 7 (b) (e.g., butt welding or penetration welding) or riveting in FIG. 7 (c) (e.g., a press-riveted connection). For a welding manner, this structure is advantageous in making the weld position (for example, a position where an outer ring of the ring body 413 abuts against the end surface of the sleeve 412) away from the sealing member 42 and the air-permeable film 40, so as not to cause damage to the sealing member 42 and the air-permeable film 40 due to excessive heat during welding.

Referring to FIG. 5 and FIG. 6, in some embodiments, the sleeve 412 also has a first end with a second annular flange 412b extending outwardly relative to a sleeve wall of the sleeve 412. An extending direction of the second annular flange 412b is perpendicular to the center line of the first through hole 30. As can be seen in FIG. 6, a structure, which is formed by the first annular flange 412a and the second annular flange 412b on the sleeve 412 and the sleeve 412, has a longitudinal cross-section similar to a T shape, which allows the sealing nail to have a wider surface at an outer side of the sealing nail, and is conducive to a further fixed connection with other components.

For the aforementioned structure where the first through hole 30 includes the first step hole section 31, the second step hole section 32, and the third step hole section 33, at least one of the second end of the sleeve 412 and the ring body 413 may be supported at the first step end surface 34, and the second annular flange 412b is supported at the second step end surface 35 and fixedly connected to the third step hole section 33.

For a three-stage step hole, a stable support function to the end surface of the second end and the second annular flange of the sleeve may be realized by the first through hole through the first step end surface and the second step end surface, and a part of the third step hole section fixedly connected to the second annular flange is farther away from the second step hole section. In this way, when a fixed connection manner such as welding is adopted, the influence of the weld heat on the sealing member and the air-permeable film that are located in the second step hole section is reduced.

Referring to labels in FIG. 6, in some embodiments, the following parameters may be defined as that: a thickness of the second annular flange 412b is d1; a thickness of the ring body 413 is d2; a radial distance from an outer edge of the second annular flange 412b to an outer edge of the sealing member 42 is d3; a capacity of a battery cell 10 using the battery end cover assembly 11 is C; a diameter of a through hole defined by the first annular flange 412a is Φ1; a diameter of a through hole defined by the ring body 413 is Φ2; a diameter of the second through hole 421 is Φ3; and a diameter of the first step hole section 31 is Φ4.

These parameters d1, d2, d3, C, Φ1, Φ2, Φ3, and Φ4 may satisfy at least one of:

(a)

$$d1/C \geq 0.022 \text{mm/Ah};$$

(b)

$$(d1+d2)/C \geq 0.06 \text{mm/Ah};$$

(c)

$$d3/C \geq 0.09 \text{mm/Ah};$$

(d) Φ4≥Φ1, Φ4≥Φ2, Φ4≥Φ3;
(e) Φ1=1~5mm, optionally, Φ1=1~3mm;
(f) Φ2=1~5mm, optionally, Φ1=1~3mm;
(g) Φ3=1~5mm, optionally, Φ1=1~3mm; and
(h) Φ4=2~5mm.

For a battery cell performing an electrical connection through the busbar, the higher the capacity C of the battery cell, the thicker the busbar is generally. In this way, higher welding energy is often required during welding of the busbar and the sealing nail by laser. Accordingly, when a ratio of the thickness d1 of the second annular flange 412b to the capacity C is too low, like smaller than 0.022 mm/Ah, heat of melting the busbar and the second annular flange during welding tends to cause the deformation or melting of the sealing member and the air-permeable film. Therefore, it is made d1/C≥0.022mm/Ah, to facilitate a reduction in the risk of the deformation or melting of the sealing member and the air-permeable film caused by heat during welding.

In order to ensure that obvious deformation or melting may not occur in the ring body and the sleeve during the thermal runaway of the battery cell, causing active materials or flames inside the battery cell to eject from the pole, resulting in serious safety risks, (d1+d2)/C≥0.06mm/Ah is made. Therefore, a possibility of disengagement of the sealing nail from the pole during the thermal runaway of the battery cell is lowered, and safety performance of the battery cell is improved.

An area of the sealing nail at the pole is expanded by providing the second annular flange. When a fixed connection between the sealing nail and the pole or the busbar is realized by laser welding, a larger radial distance d3 may make a weld position between the sealing nail and the pole far away from the sealing member, and welding of the sealing nail and the busbar at a position farther away from the sealing member is allowable, thereby lowering the risk of the deformation or melting of the sealing member and the air-permeable film due to the influence of the weld heat.

Considering that the first step hole section of the pole is used for electrolyte injection, and then the sealing nail is assembled at the pole, the injection efficiency of the electrolyte may be improved by providing a larger diameter $\Phi 4$ of the first step hole section. The slow leakage of the gas in the battery cell may be realized by using smaller diameters $\Phi 1$, $\Phi 2$, and $\Phi 3$ of the through hole accordingly. In this way, under extreme conditions such as excessive internal pressure or thermal runaway of the battery cell, the sealing nail will not be opened or melted first than an explosion-proof valve of the battery cell.

When the diameters $\Phi 1$, $\Phi 2$, and $\Phi 3$ of the through hole are too large, the melting of the sealing member and the air-permeable film occurs during the thermal runaway of the battery cell, causing the active material in the battery cell to eject or eject flames through the sealing nail. The ejected active material will cause short circuit of positive and negative electrodes, while the ejected flames will cause deformation of the busbar and other components, and may also cause the short circuit of positive and negative electrodes. When the diameter $\Phi 4$ is too large, it is easy to cause excessive heat to be transferred to the sealing nail during the thermal runaway of the battery, and also to cause the occurrence of the melting of the sealing member and the air-permeable film during the thermal runaway of the battery cell.

When the diameters $\Phi 1$, $\Phi 2$, and $\Phi 3$ of the through hole are too small, an effect of releasing the internal pressure of the battery cell is not obvious. Moreover, too small diameter $\Phi 4$ will affect the injection efficiency.

Therefore, by setting appropriate diameters $\Phi 1$, $\Phi 2$, and $\Phi 3$ of the through hole, the excessive air pressure inside the battery cell may be effectively released, and safety of the battery cell in extreme cases such as the thermal runaway of the battery cell may be improved. By setting the aforementioned suitable diameter $\Phi 4$, the injection efficiency of the electrolyte may be effectively improved, and the safety of the battery cell in extreme cases such as the thermal runaway of the battery cell may be improved.

In FIG. 6, the sealing member 42 includes an elastic sealing ring embedded in the annular groove 411. The annular groove 411 has an annular protrusion 411a formed at a groove wall of the annular groove 411 on at least one side of the annular groove 411. The annular protrusion 411a is in close contact with an outer wall of the elastic sealing ring. An inner ring diameter of the annular protrusion 411a is $\Phi 6$. The parameters $\Phi 1$, $\Phi 2$, $\Phi 3$, and $\Phi 6$ satisfy: $\Phi 6 \geq \Phi 1$, $\Phi 6 \geq \Phi 2$, and $\Phi 6 \geq \Phi 3$. By making the inner ring diameter $\Phi 6$ of the annular protrusion greater than or equal to the diameters $\Phi 1$, $\Phi 2$, and $\Phi 3$ of the through hole, a larger close contact area may be allowed to be obtained between the elastic sealing ring and the annular protrusion, thereby forming a more reliable sealing effect.

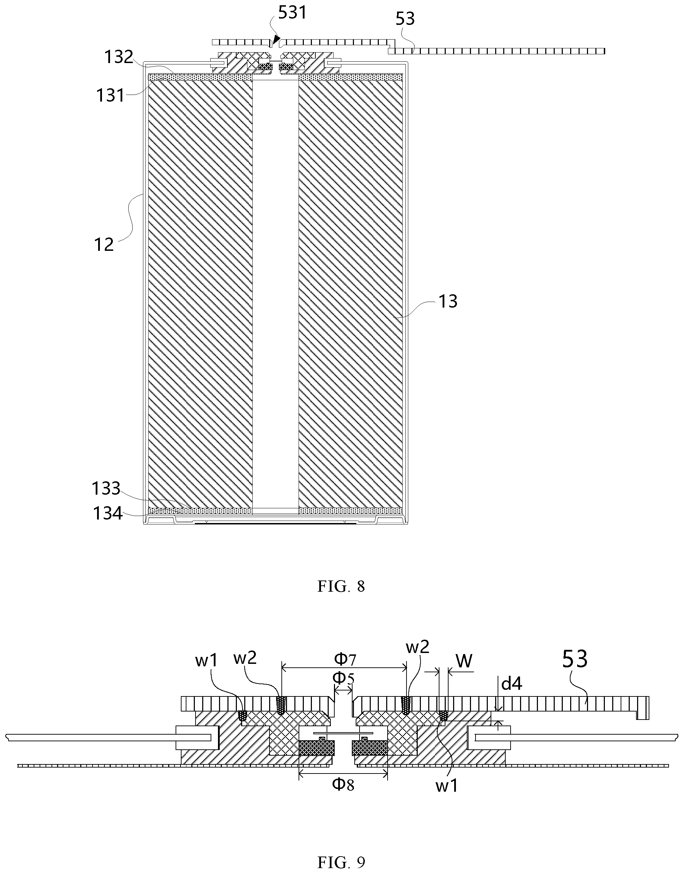

FIG. 8 is a schematic cross-sectional view of a battery cell and a busbar according to some embodiments of a battery of the present disclosure. FIG. 9 is a schematic structural view where a busbar is welded onto a sealing nail according to some embodiments of a battery of the present disclosure. Referring to FIG. 9, in some embodiments, the second annular flange 412b is welded to the third step hole section 33. A fusion depth of a weld seam w1 obtained through welding is d4, where d4≥0.3mm, optionally, d4≥0.5mm. A fusion width of the weld seam w1 obtained through the welding is W, where W≥0.5mm, optionally, W≥1mm. When the second annular flange and the third step hole section of the sleeve are connected to each other by welding, an appropriate fusion depth and fusion width may improve a connection strength between the sealing nail and the pole, causing the weld seam to be less likely to fail during the thermal runaway of the battery cell.

Referring to FIG. 3, FIG. 8, and FIG. 9, in some embodiments, the battery 50 includes a plurality of battery cells 10 and a busbar 53. At least one of the plurality of battery cells 10 is the aforementioned battery cell 10. The plurality of battery cells 10 are electrically connected to each other through the busbar 53. The electrical connection between the plurality of battery cells 10 may be realized through the busbar 53. The battery using the foregoing battery cell may obtain better safety performance.

In FIG. 3, FIG. 8, and FIG. 9, the busbar 53 may be located at a side of the end cover 2 adjacent to the sealing nail 4 and has an end portion fixedly connected to at least one of the sealing nail 4 and the pole 3. The end portion has a third through hole 531 in communication with the hollow structure.

The third through hole is disposed at the busbar and is in communication with the hollow structure of the sealing nail, so that the excessive air pressure inside the battery cell may be discharged outwards through the air-permeable film located in the hollow structure and the third through hole, thereby lowering the risk of excessive deformation or liquid leakage of the battery cell caused by the excessive pressure inside the battery cell.

In FIG. 9, the busbar 53 has a tapered structure protruding towards the sealing nail 4 at a hole perimeter of the third through hole 531 at a side of the third through hole 531 adjacent to the sealing nail 4, and the sealing nail 4 has a tapered hole matching the tapered structure, which is conducive to positioning of the busbar 53 during welding of the busbar 53 with the sealing nail 4. In this way, it is ensured that the weld seam is not easily offset, and an inappropriate position of the weld seam is avoided due to an arrangement position offset of the busbar, thereby causing the air-permeable film or the sealing member to fail.

Referring to FIG. 9, in some embodiments, a diameter of the third through hole 531 is $\Phi 5$, where $\Phi 5 = 0.5 \sim 5$mm, optionally, $\Phi 5 = 0.5 \sim 2.5$mm. By adopting a suitable diameter $\Phi 5$ of the third through hole, while an effect of releasing the internal air pressure of the battery cell is satisfied, the slow leakage of the gas in the battery cell may be realized. In this way, under extreme conditions such as the excessive internal pressure or thermal runaway of the battery cell, the sealing nail is caused not to be opened or melted first than the explosion-proof valve of the battery cell.

In FIG. 9, a diameter of an annular weld seam w2 formed by welding the busbar 53 and the fixing member 41 is $\Phi 7$, and a diameter of a circumferential outer edge of the sealing member 42 is $\Phi 8$, where $\Phi 7 \geq 1.1 \ast \Phi 8$, optionally, $\Phi 7 \geq 1.5 \ast \Phi 8$. When the diameter of the annular weld w2 is large, a welding part may be made farther away from the sealing member, thereby reducing the influence of the weld heat on the sealing member and the air-permeable film.

Based on various embodiments of the above battery end cover assembly of the present disclosure, the embodiments of the present disclosure further provide a battery cell, which includes the foregoing battery end cover assembly. The battery cell adopting the foregoing electrode assembly may obtain better safety performance.

In an aspect of the present disclosure, a battery is provided. The battery includes the foregoing battery cell. The battery adopting the foregoing battery cell may obtain better safety performance.

In an aspect of the present disclosure, an electric device is provided, including the foregoing battery. The electric device using the foregoing battery may obtain better safety performance.

While the present disclosure has been described with reference to preferred embodiments, various modifications may be made and equivalents may be substituted for components thereof without departing from the scope of the present disclosure. In particular, the technical features mentioned in the various embodiments can be combined in any manner as long as there is no structural conflict. The present disclosure is not limited to the particular embodiments disclosed herein, and includes all technical solutions falling within the scope of the claims.

**Claims**

1. A battery end cover assembly (11), comprising:

    an end cover (2);
    a pole (3) disposed at the end cover (2), the pole (3) having a first through hole (30); and

    a sealing nail (4) fixedly connected to the pole (3), the sealing nail (4) comprising a hollow structure in communication with the first through hole (30) and an air-permeable film (40) covering the hollow structure.

2. The battery end cover assembly (11) according to claim 1, wherein the sealing nail (4) comprises:

    a fixing member (41) fixedly connected to the pole (3), the fixing member (41) having a hollow inner cavity;
    a sealing member (42) disposed in the hollow inner cavity, the sealing member (42) having a second through hole (421), the hollow structure being defined by the second through hole (421) and the hollow inner cavity; and
    the air-permeable film (40) fixedly connected to the second through hole (421) at a periphery of the air-permeable film (40) and closing the second through hole (421), to enable the hollow structure to be covered with the air-permeable film (40).

3. The battery end cover assembly (11) according to any one of the preceding claims, wherein:

    the sealing member (42) is made of a heat insulation material;
    the second through hole (421) has a connection slot at a hole wall of the second through hole (421); and
    the periphery of the air-permeable film (40) is fixedly inserted into the connection slot.

4. The battery end cover assembly (11) according to any one of the preceding claims, wherein:

    the hollow inner cavity has an annular groove (411) formed at a cavity wall of the hollow inner cavity; and
    the sealing member (42) comprises an elastic sealing ring embedded in the annular groove (411), the elastic sealing ring being in an interference fit with the annular groove (411).

5. The battery end cover assembly (11) according to any one of the preceding claims, wherein the annular groove (411) has an annular protrusion (411a) formed at a groove wall of the annular groove (411) on at least one side of the annular groove (411), the annular protrusion (411a) being in close contact with an outer wall of the elastic sealing ring.

6. The battery end cover assembly (11) according to any one of the preceding claims, wherein the first through hole (30) comprises a first step hole section (31) and a second step hole section (32), wherein:

a cross-sectional area of the first step hole section (31) is smaller than a cross-sectional area of the second step hole section (32); and the sealing nail (4) is supported at a first step end surface (34) where the first step hole section (31) intersects with the second step hole section (32), and is fixedly connected to the second step hole section (32).

7. The battery end cover assembly (11) according to any one of the preceding claims, wherein the first through hole (30) comprises a first step hole section (31), a second step hole section (32), and a third step hole section (33), wherein:

   the third step hole section (33) is located at a side of the second step hole section (32) away from the first step hole section (31); a cross-sectional area of the first step hole section (31) is smaller than a cross-sectional area of the second step hole section (32); the cross-sectional area of the second step hole section (32) is smaller than a cross-sectional area of the third step hole section (33); and the sealing nail (4) is supported at least one of a first step end surface (34) where the first step hole section (31) intersects with the second step hole section (32) and a second step end surface (35) where the second step hole section (32) intersects with the third step hole section (33), and is fixedly connected to the third step hole section (33).

8. The battery end cover assembly (11) according to any one of the preceding claims, wherein:

   a circumferential outer contour of the sealing nail (4) is closely attached to an inner contour of the first through hole (30); and in an axial direction of the first through hole (30), an end portion of the sealing nail (4) away from the first step hole section (31) is flush with a surface of the pole (3) away from the first step hole section (31).

9. The battery end cover assembly (11) according to any one of the preceding claims, wherein the fixing member (41) comprises:

   a sleeve (412) having an end with a first annular flange (412a) extending inwardly relative to an inner wall of the sleeve (412), an extending direction of the first annular flange (412a) being perpendicular to a center line of the first through hole (30); and a ring body (413) fixedly connected to an inner wall of the sleeve (412) at a side of the sleeve (412) away from the first annular flange (412a),

wherein an annular groove (411) accommodating the sealing member (42) is defined by the ring body (413) and the first annular flange (412a).

10. The battery end cover assembly (11) according to any one of the preceding claims, wherein the fixing member (41) comprises:

   a sleeve (412), a first end of the sleeve (412) having a first annular flange (412a) extending inwardly relative to a sleeve wall of the sleeve (412), an extending direction of the first annular flange (412a) being perpendicular to a center line of the first through hole (30); and a ring body (413) fixedly connected to an end surface of a second end of the sleeve (412) at a side of the sleeve (412) away from the first annular flange (412a), the end surface of the second end being perpendicular to the center line of the first through hole (30), wherein an annular groove (411) accommodating the sealing member (42) is defined by the ring body (413) and the first annular flange (412a).

11. The battery end cover assembly (11) according to any one of the preceding claims, wherein:

   the first end of the sleeve (412) further has a second annular flange (412b) extending outwardly relative to the sleeve wall of the sleeve (412), an extending direction of the second annular flange (412b) being perpendicular to the center line of the first through hole (30); and the first through hole (30) comprises a first step hole section (31), a second step hole section (32), and a third step hole section (33), wherein:

      the third step hole section (33) is located at a side of the second step hole section (32) away from the first step hole section (31); a cross-sectional area of the first step hole section (31) is smaller than a cross-sectional area of the second step hole section (32); the cross-sectional area of the second step hole section (32) is smaller than a cross-sectional area of the third step hole section (33); at least one of the second end of the sleeve (412) and the ring body (413) is supported at a first step end surface (34) where the first step hole section (31) intersects with the second step hole section (32); and the second annular flange (412b) is supported at a second step end surface (35) where the second step hole section (32) intersects with the third step hole section (33),

and is fixedly connected to the third step hole section (33).

12. The battery end cover assembly (11) according to any one of the preceding claims, wherein:

a thickness of the second annular flange (412b) is d1;
a thickness of the ring body (413) is d2;
a radial distance from an outer edge of the second annular flange (412b) to an outer edge of the sealing member (42) is d3;
a capacity of a battery cell (10) using the battery end cover assembly (11) is C;
a diameter of a through hole defined by the first annular flange (412a) is $\Phi 1$;
a diameter of a through hole defined by the ring body (413) is $\Phi 2$;
a diameter of the second through hole (421) is $\Phi 3$; and
a diameter of the first step hole section (31) is $\Phi 4$,
wherein d1, d2, d3, C, $\Phi 1$, $\Phi 2$, $\Phi 3$, and $\Phi 4$ satisfy at least one of:

(a)

$$d1/C \geq 0.022 mm/Ah;$$

(b)

$$(d1+d2)/C \geq 0.06 mm/Ah;$$

(c)

$$d3/C \geq 0.09 mm/Ah;$$

(d) $\Phi 4 \geq \Phi 1$, $\Phi 4 \geq \Phi 2$, $\Phi 4 \geq \Phi 3$;
(e) $\Phi 1 = 1 \sim 5 mm$, optionally, $\Phi 1 = 1 \sim 3 mm$;
(f) $\Phi 2 = 1 \sim 5 mm$, optionally, $\Phi 1 = 1 \sim 3 mm$;
(g) $\Phi 3 = 1 \sim 5 mm$, optionally, $\Phi 1 = 1 \sim 3 mm$; and
(h) $\Phi 4 = 2 \sim 5 mm$.

13. The battery end cover assembly (11) according to any one of the preceding claims, wherein the second annular flange (412b) is welded to the third step hole section (33), wherein:

a fusion depth of a weld seam (w1) obtained through welding is d4, where $d4 \geq 0.3 mm$, optionally, $d4 > 0.5 mm$; and
a fusion width of the weld seam (w1) obtained through the welding is W, where $W \geq 0.5 mm$, optionally, $W \geq 1 mm$.

14. The battery end cover assembly (11) according to any one of the preceding claims, wherein:

the hollow inner cavity has an annular groove (411) formed at a cavity wall of the hollow inner cavity;
the sealing member (42) comprises an elastic sealing ring embedded in the annular groove (411);
the annular groove (411) has an annular protrusion (411a) formed at a groove wall of the annular groove (411) on at least one side of the annular groove (411);
the annular protrusion (411a) is in close contact with an outer wall of the elastic sealing ring; and
an inner ring diameter of the annular protrusion (411a) is $\Phi 6$, where $\Phi 6 \geq \Phi 1$, $\Phi 6 \geq \Phi 2$, $\Phi 6 \geq \Phi 3$.

15. The battery end cover assembly (11) according to any one of the preceding claims, wherein the air-permeable film (40) has an air permeability ranging from 5 mm/s to 50 mm/s and a melting point greater than or equal to 150°C.

16. The battery end cover assembly (11) according to any one of the preceding claims, wherein the air-permeable film (40) comprises a nanofiber membrane having a thickness T1 ranging from 0.01 mm to 1 mm and micropores, the micropores each having a pore diameter ranging from 0.5 $\mu$m to 10 $\mu$m.

17. The battery end cover assembly (11) according to any one of the preceding claims, wherein a thickness T2 of the sealing member (42) ranges from 0.1 mm to 1 mm.

18. A battery cell (10), comprising

a housing (12) having a chamber;
an electrode assembly (13) located in the chamber; and
the battery end cover assembly (11) according to any one of the preceding claims, the battery end cover assembly (11) being disposed at an end of the housing (12), and the pole (3) of the battery end cover assembly (11) being electrically connected to the electrode assembly (13).

19. The battery cell (10) according to any one of the preceding claims, wherein:
the electrode assembly (13) is a cylindrical electrode assembly, the cylindrical electrode assembly having a cross-sectional diameter D ranging from 20 mm to 60 mm and an axial length H ranging from 60 mm to 150 mm.

20. The battery cell (10) according to any one of the preceding claims, wherein:

the cross-sectional diameter D of the cylindrical electrode assembly ranges from 36 mm to 56 mm; and

the axial length H of the cylindrical electrode assembly ranging from 80 mm to 130 mm.

21. A battery (50), comprising:

a plurality of battery cells (10), at least one of the plurality of battery cells (10) being the battery cell (10) according to any one of the preceding claims; and

a busbar (53),

wherein the plurality of battery cells (10) are electrically connected to each other through the busbar (53).

22. The battery (50) according to any one of the preceding claims, wherein the busbar (53) is located at a side of an end cover (2) adjacent to a sealing nail (4) and has an end portion fixedly connected to at least one of the sealing nail (4) and the pole (3), the end portion having a third through hole (531) in communication with a hollow structure.

23. The battery (50) according to any one of the preceding claims, wherein a diameter of the third through hole (531) is $\Phi 5$, where $\Phi 5=0.5\sim5$mm, optionally, $\Phi 5=0.5\sim2.5$mm.

24. The battery (50) according to any one of the preceding claims, wherein a diameter of an annular weld seam (w2) formed by welding the busbar (53) and the fixing member (41) is $\Phi 7$, and a diameter of a circumferential outer edge of the sealing member (42) is $\Phi 8$, where $\Phi 7 \geq 1.1*\Phi 8$, optionally, $\Phi 7 \geq 1.5*\Phi 8$.

25. An electric device, comprising the battery according to any of the preceding claims.

FIG. 1

FIG. 2

FIG. 3

FIG. 4

FIG. 5

FIG. 6

FIG. 7

FIG. 8

FIG. 9

## INTERNATIONAL SEARCH REPORT

| International application No. |
|---|
| **PCT/CN2022/092657** |

**A.   CLASSIFICATION OF SUBJECT MATTER**

H01M50/559(2021.01)i;H01M50/30(2021.01)i;H01M50/627(2021.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 电池, 极柱, 端子, 通孔, 中空, 密封, 透气膜, battery, pole, terminal, through hole, hollow, seal, gas permeable membrane

**C.     DOCUMENTS CONSIDERED TO BE RELEVANT**

| Category* | Citation of document, with indication, where appropriate, of the relevant passages | Relevant to claim No. |
|---|---|---|
| Y | CN 201069794 Y (DONG XINGGUO) 04 June 2008 (2008-06-04)<br>description, p. 2, paragraph 2 to p. 6, paragraph 2, and figures 1-2 | 1-25 |
| Y | CN 208507798 U (NINGDE CONTEMPORARY AMPEREX TECHNOLOGY CO., LTD.)<br>15 February 2019 (2019-02-15)<br>description, paragraphs 3-49, and figures 1-6 | 1-25 |
| Y | JP 2002093668 A (NOK CORP.) 29 March 2002 (2002-03-29)<br>description, paragraphs 5-58, and figures 1-8 | 1-25 |
| A | CN 208674254 U (SOUND GROUP CO., LTD. et al.) 29 March 2019 (2019-03-29)<br>entire document | 1-25 |
| A | JP 2010135247 A (PANASONIC CORP.) 17 June 2010 (2010-06-17)<br>entire document | 1-25 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 February 2023** | **09 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT
### Information on patent family members

International application No.

**PCT/CN2022/092657**

| Patent document cited in search report | | | Publication date (day/month/year) | Patent family member(s) | | | Publication date (day/month/year) |
|---|---|---|---|---|---|---|---|
| CN | 201069794 | Y | 04 June 2008 | None | | | |
| CN | 208507798 | U | 15 February 2019 | None | | | |
| JP | 2002093668 | A | 29 March 2002 | JP | 4502095 | B2 | 14 July 2010 |
| CN | 208674254 | U | 29 March 2019 | None | | | |
| JP | 2010135247 | A | 17 June 2010 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 54531997 T